# EUROPÄISCHE PATENTANMELDUNG

(11) **EP 0 903 319 A1**
(43) Veröffentlichungstag der Anmeldung: **24.03.1999**
(21) Anmeldenummer: 98250300.5
(22) Anmeldetag: 25.08.1998
(51) Int. Cl.: B66F 11/04, B66C 19/00, B64F 5/00

(54) **Wartungsplattform, insbesondere für Wartungsarbeiten an Flugzeugen**

(30) Priorität: 18.09.1997 DE 19741692
(71) Anmelder: MANNESMANN Aktiengesellschaft, 40213 Düsseldorf (DE)
(72) Erfinder: Berns, Matthias, Dipl.-Ing., 44289 Dortmund (DE); Oberleitner, Helmut, Dipl.-Ing., 59439 Holzwickede (DE); Wiechetek, Richard, Dipl.-Ing., 58300 Wetter (DE); Wiggershaus, Fred, Dipl.-Ing., 58285 Gevelsberg (DE); Wohlert, Arno, Dipl.-Ing., 58300 Wetter (DE)
(74) Vertreter: Presting, Hans-Joachim, Dipl.-Ing.

(57) **Zusammenfassung**

Die Erfindung betrifft eine Wartungsplattform, insbesondere für Wartungsarbeiten an Flugzeugen, die an dem untersten Schuß einer mehrere Schüsse aufweisenden vertikalen Teleskopsäule um die Achse der Teleskopsäule drehbar angeordnet ist, die ihrerseits an einer horizontal verfahrbaren Laufkatze befestigt ist.
Erfindungsgemäß ist vorgesehen, daß die Laufkatze (8) mit ihrem Fahrwerk (6) den Kastenträger (3) eines selbstfahrenden Portalkranes (1) übergreift und seitlich des Kastenträgers (3) mit einer horizontalen Tragebene (10) versehen ist, die von der Teleskopsäule (11) durchdrungen ist.

## Beschreibung

Die Erfindung betrifft eine Wartungsplattform, insbesondere für Wartungsarbeiten an Flugzeugen, gemäß dem Oberbegriff des Patentanspruchs 1.

Aus dem Prospekt der Mannesmann Demag Fördertechnik AG "Hangarausrüstung" ist eine Wartungsplattform für Wartungsarbeiten an Flugzeugen bekannt, die am untersten Schuß einer Teleskopsäule mit mehreren gleichzeitig nach unten ausfahrbaren Schüssen befestigt ist. Die Wartungsplattform ist um die vertikale Achse der Teleskopsäule drehbar. Sie kann, dicht über dem Boden schwebend, vom Bedienungspersonal betreten werden. Erforderliches Arbeitsmaterial wird am Boden auf die Plattform übernommen.

Zum Verfahren der Wartungsplattform ist das obere Ende der Teleskopsäule an einer horizontal verfahrbaren Zweischienen-Laufkatze befestigt, deren Fahrschienen an der Deckenkonstruktion des Hangars befestigt sind. Der Deckenraum dient dabei als Transport- und Fahrebene für die Wartungsgeräte. Nachteilig ist, daß mehrere Fahrschienen an der Decke vorzusehen sind, um den gesamten Innenraum des Hangars von einer Wartungsplattform aus bedienen zu können.

Die Aufgabe der Erfindung ist es, eine Wartungsplattform, insbesondere für Wartungsarbeiten an Flugzeugen, vorzuschlagen, die mit relativ geringem Aufwand den gesamten Innenraum eines Hangars bedienen kann und auch im Freien verwendbar ist.

Diese Aufgabe wird erfindungsgemäß durch die im Patentanspruch 1 angegebenen Merkmale gelöst. Durch die kennzeichnenden Merkmale der Unteransprüche 2 bis 5 ist die Wartungsplattform in vorteilhafterweise ausgestaltet.

Die Erfindung sieht vor, daß die Laufkatze mit ihrem Fahrwerk den Kastenträger eines selbstfahrenden Portalkrans übergreift und seitlich des Kastenträgers mit einer horizontalen Tragebene versehen ist, die von der Teleskopsäule durchdrungen ist. Obwohl bei dieser Lösung nur eine einzige Fahrschiene vorgesehen ist, kann die Wartungsplattform jeden Ort im Innenraum eines Hangars aber auch im Freien im Bereich eines Flugzeuges erreichen, so daß Wartungsarbeiten zeiteffektiv ausgeführt werden können. Die erfindungsgemäße Konstruktion zeichnet sich durch ein geringes Gewicht aus, so daß ein schienenloser Einsatz des Portalkrans ermöglicht wird.

Eine vorteilhafte Ausgestaltung des Portalkrans besteht darin, diesen wechselseitig, d.h. jeweils um eine im Bereich seiner beiden Fahrwerke gegenüber dem Planum festlegbare vertikale Achse schwenkbar auszuführen, so daß ein definiertes Schwenken beispielsweise um einen der Maste des Portalkrans möglich ist. Dies ist insbesondere bei Wartungsarbeiten an Flugzeugen häufig erwünscht.

Mit einfachen Mitteln läßt sich die Schwenkbarkeit des Portalkrans dadurch erreichen, daß zur Bildung der Schwenkachse ein Abstandsteller koaxial drehbar am freien Ende einer Spindel oder Kolbenzylindereinheit vorgesehen ist, die an jedem Fahrwerk des Portalkrans vertikal ausgerichtet ist und mittels der der Abstützteller gegen das Planum andrückbar ist.
Um die Arbeitsplattform auch mit schweren Lasten versorgen zu können, wird mit der Erfindung vorgeschlagen, eine weitere Laufkatze am Kastenträger vorzusehen, die unabhängig von der ersten Laufkatze verfahrbar ist.

Eine einfache Erweiterung des Portalkrans wird dadurch sichergestellt, daß stirnseitig an dem Kastenträger Verriegelungsmittel zur Verbindung des Kastenträgers mit einem zweiten Portalkran oder Laufkran vorgesehen sind.

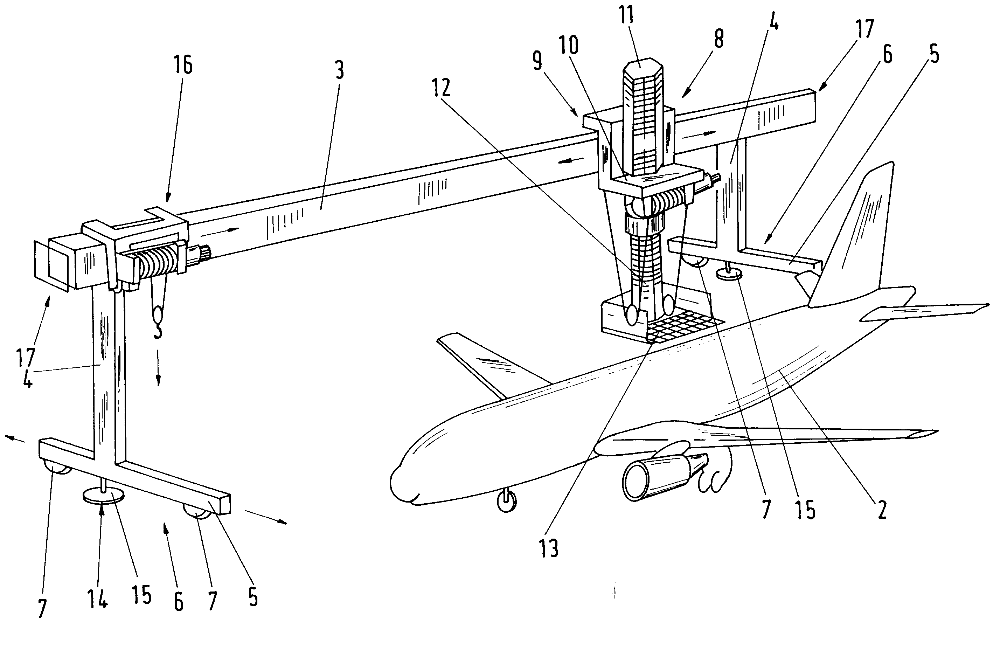

Ein Ausführungsbeispiel der Erfindung ist in einer einzigen Figur dargestellt und wird nachfolgend näher beschrieben.

Die Figur zeigt in schematischer Darstellung einen Portalkran 1, der im Freien auf einem Planum verfahrbar und für Wartungsarbeiten an Flugzeugen 2 einsetzbar ist. Der Portalkran 1 weist als Portal einen horizontalen Kastenträger 3 auf, dessen Ende an den oberen Enden von zwei Masten 4 befestigt sind. Die Maste 4 sind an ihrem unteren Ende mit Quertraversen 5 versehen, die als Fahrwerk 6 mit Rädern 7 ausgebildet sind. Die Räder 7 sind jeweils in Richtung der Längserstreckung der Quertraverse 5 beabstandet angeordnet, wobei zumindest eines der Räder 7 jedes Fahrwerkes 6 antreibbar ist.

Auf dem Kastenträger 3 ist eine Laufkatze 8 in dessen Längsrichtung verfahrbar angeordnet. Das Fahrwerk 9 der Laufkatze übergreift den Kastenträger 3 und ist seitlich mit einer horizontalen Tragebene 10 versehen.

Die Tragebene 10 ist von einer Teleskopsäule 11 durchdrungen und weist mehrere Schüsse auf, welche in bekannter Weise gleichzeitig auseinanderfahrbar sind. Am unteren Ende des untersten Schusses 12 ist eine horizontale Wartungsplattform 13 vorgesehen, welche um die Längsachse der Teleskopsäule 11 drehbar ist.

Für Kurvenfahrten ist an den Fahrwerken 6 jeweils eine vertikale Spindel 14 vorgesehen, die koaxial drehbar an ihrem freien Ende einen Abstützteller 15 aufweist. Durch Drehung der Spindel um ihre vertikale Achse ist der Abstützteller 15 gegen das Planum andrückbar, wodurch das Fahrwerk gegenüber dem Planum festlegbar ist. Das Festlegen mittels der Spindel 14 ergibt gleichzeitig eine vertikale Schwenkachse, um die der Portalkran 1 schwenkbar ist. Dies kann wechselseitig durch Betätigung der jeweiligen Spindel 14 geschehen. Selbstverständlich ist anstelle einer Spindel 14 auch eine Kolbenzylindereinheit denkbar.

Zur Versorgung der Arbeitsplattform mit Lasten ist eine weitere Laufkatze 16 vorgesehen, die am Kastenträger 3 unabhängig von der ersten Laufkatze 8 verfahrbar ist.

Stirnseitig weist der Kastenträger Verriegelungsmittel 17 auf, welche es gestatten, den Kastenträger 3 mit einem zweiten Portalkran oder Laufkran zu verbinden.

## Patentansprüche

1. Wartungsplattform, insbesondere für Wartungsarbeiten an Flugzeugen, die an dem untersten Schuß einer mehrere Schüsse aufweisenden vertikalen Teleskopsäule um die Achse der Teleskopsäule drehbar angeordnet ist, die ihrerseits an einer horizontal verfahrbaren Laufkatze befestigt ist, dadurch gekennzeichnet, daß die Laufkatze (8) mit ihrem Fahrwerk (6) den Kastenträger (3) eines selbstfahrenden Portalkranes (1) übergreift und seitlich des Kastenträgers (3) mit einer horizontalen Tragebene (10) versehen ist, die von der Teleskopsäule (11) durchdrungen ist.

2. Wartungsplattform nach Anspruch 1, dadurch gekennzeichnet,
daß der Portalkran (1) wechselseitig um eine im Bereich seiner beiden Fahrwerke (6) gegenüber dem Planum festlegbare vertikale Achse schwenkbar ist.

3. Wartungsplattform nach Anspruch 2, dadurch gekennzeichnet,
daß zur Bildung der Schwenkachse ein Abstützteller (15) koaxial drehbar am freien Ende einer Spindel- oder Kolbenzylindereinheit (14) vorgesehen ist, die an jedem Fahrwerk (6) des Portalkranes (1) vertikal ausgerichtet ist und mittels der der Abstützteller (15) gegen das Planum andrückbar ist.

4. Wartungsplattform nach einem der Ansprüche 1 bis 3, dadurch gekennzeichnet,
daß zur Versorgung der Arbeitsplattform (13) mit Lasten eine weitere Laufkatze (16) am Kastenträger (3) vorgesehen ist, die unabhängig von der ersten Laufkatze (8) verfahrbar ist.

5. Wartungsplattform nach einem der Ansprüche 1 bis 4, dadurch gekennzeichnet,
daß stirnseitig an dem Kastenträger (3) Verriegelungsmittel (17) zur Verbindung des Kastenträgers (3) mit einem zweiten Portalkran oder Laufkran vorgesehen sind.
